# EUROPEAN PATENT APPLICATION

(11) **EP 4 657 306 A1**
(43) Date of publication of application: **03.12.2025**
(21) Application number: 24178722.5
(22) Date of filing: 29.05.2024
(51) Int. Cl.: G06F 40/169, G06N 20/00, G06Q 50/04

(54) **METHOD AND ARRANGEMENT FOR GENERATING A PIPING AND INSTRUMENTATION DIAGRAM LIBRARY**

(71) Applicant: Siemens Aktiengesellschaft, 80333 München (DE)
(72) Inventor: Wendelberger, Klaus Walter, 68789 St. Leon-Rot (DE); Zhang, Jia Rui, 200120 Shanghai (CN); Mogoreanu, Serghei, 81827 München (DE); Hildebrandt, Marcel, 80634 München (DE); Ringsquandl, Martin, 83064 Raubling (DE)
(74) Representative: Siemens Patent Attorneys

(57) **Abstract**

The invention relates to a computer-implemented method for generating a Piping and Instrumentation Diagram-, "P&ID"-, library, in particular for building a P&ID representing a process, in particular industrial process, to be established, whereby said "P&ID"-, library is generated in such a manner that at least part of its data is applicable to train at least one LLM. It also relates to an arrangement for carrying out the method, a computer-program product and a provisioning device.

## Description

The invention relates to a computer implemented method according to the preamble of claim 1, an arrangement for carrying out the computer implemented method according to the preamble of claim 12, as well as a computer-program product according to the preamble of claim 13 and a provisioning device according to the preamble of claim 14.

It is known that a key aspect of the process industry is the creation of so-called Piping and Instrumentation Diagrams (P&IDs). P&IDs are complex diagrams that usually illustrate the process equipment including their interconnections as well as the sensors and actuators used to control a process and to ensure safety during process operation.

These diagrams are the foundation for understanding the entire process flow and are critical for designing, operating, and maintaining the process systems. They depict the relationship between all the components of a physical process flow, such as equipment, pipes, and instruments, their interconnections, and provide the basic information on how the process is controlled.

Creating P&IDs can be a challenging task because these diagrams must accurately represent complex physical systems and comprehend the different aspects of production in process industries including the properties of different materials and possibly their chemical reactions. Therefore, a deep understanding of the process and system is required. As a result, the creation of P&IDs is a labor-intensive and time-consuming process, which often involves multiple revisions to ensure accuracy and compliance with industry standards.

To simplify the process of creating a new P&ID, companies tend to create and maintain a database of common sub-systems, so-called "typicals", that can be used as a reference when designing a P&ID. They usually include standard configurations of equipment, piping, and instrumentation that are commonly used in the company's processes. This can greatly simplify and speed up the design process, ensuring consistency across different projects, reducing the potential for errors, and ensuring adherence to company and industry standards. Nonetheless, identifying the required sub-systems and correctly combining them to fulfill all functional requirements remains a challenging and time-consuming task.

The underlying objective of the invention is therefore to identify problems related to the establishment of new production processes, particularly related to the generation of P&IDs. Furthermore, the task is to provide a solution that overcomes at least some of the problems that have been identified.

The objective is at least partially solved by the fact that the inventors have identified problems in their inventive assessment of the European patent application entitled "Method and arrangement for the preparation of a piping and instrument diagram", filed on the same day as the present application by the same applicant, with the applicant's file number 202408010, hereinafter referred to as the "related application", whereby the disclosure of said related application is incorporated by reference and/or at least the definitions of the terms used in this application that can be also found in said related application also define the scope of said terms in this application.

According to the inventive assessment in the related application a system for generating a P&ID from the functional requirements to produce a specific product ("recipe") expressed by the user in natural language is proposed. It was further assessed that the proposed system leverages a database of annotated P&IDs, which can be derived from past projects, to first identify the required building blocks (sub-systems), and then combine them into a single coherent system by identifying missing pipes and signal lines going from the equipment nodes of one sub-system towards the equipment nodes in other sub-systems. At its core, this system uses large language models (LLMs) for performing each of the required steps.

It was further found that such a system allows the creation of P&IDs in a very seamless and quick way and that the availability of the database of annotated P&IDs is crucial to the functionality of the system. To create a correct P&ID for a specific project, all required sub-systems must be present in the related P&IDs in the database in the specific variant which fulfills all the requirements of this project. However, since several elements could be present or not in a certain P&ID of a sub-system in accordance with the project requirements, many variants could exist. For example, if a P&ID of one sub-system contains only five of such optional elements, more than thirty P&ID variants must be considered for this sub-system.

Inventors further assessed that it is stated in the related application that the manual annotation of each P&ID in the database would require tremendous efforts from the domain experts and that therefore, a technique known as few-shot prompting to generate the annotations using a pre-trained LLM is proposed. They further found that for the pre-training of the LLM still a considerable number of annotated P&IDs with the respective variants is required. They identified also that the perturbation of the different options must be well presented to enable the Al to learn which option leads to which modification of the P&ID and that for the training of an LLM which can finally create a P&ID from the identified building blocks (sub-systems) the availability of enough training data is required as well.

In connection with the inventive assessment, it was acknowledged that the automatic creation of engineering artifacts is investigated since many years. For example, the patent EP0770945B1 teaches a method for the automated creation of a process scheme. A rule-based approach involving an expert system is proposed to generate P&IDs.

It was also acknowledged that rule-based approaches were also used to generate other engineering artifacts. For example, patent EP2671122B1 (Automated Planning of Control Equipment of a Technical System) suggests a rule-based approach to generate functional diagrams, operator screens, and verbal functional descriptions based on project specific requirements.

Such rule-based approaches were successfully implemented and used in several instances. For example, control systems are known that include a functionality to automatically create engineering artifacts as suggested in EP2671122B1. However, a wide distribution of such systems could not be seen. Inventors identified that this is because the implementation of a rule-based approach requires a modeling of the specific engineering artifacts for the specific domain including the definition of the related variants and the rules which determine the conditions under which a certain variant is valid. Therefore, the efforts to implement and maintain such a system are quite high.

It was further assessed that based on the activities around Industry 4.0, approaches for flexible production are discussed an example of such discussion is given by Diedrich, et al., (2022). Information Model for Capabilities, Skills & Services. 10.13140/RG.2.2.30098.53440. In this paper, it is described how to model the capabilities provided by plant components (like pumps, tanks, heat exchangers) as well as the capabilities required to produce a certain product (as described via a recipe). It was identified that via the so-called "capability matching", it can be determined which plant components are needed in which order to produce a certain product. It was also identified that the PCT Application PCT/CN2023/115916 (A Method to Support Guided, Interactive, and Automatic Production Process Designs via Capability Matching and Engineering Rule-based Inference) suggests using this basic idea for the automatic design of processes in process industries.

Inventively it was further recognized that the major advantage of Capability Matching over a rule-based approach is the reduction of the modeling efforts. It was found that with this approach, the modeling does not need to be carried out use case specific but only component specific and that only for a very limited number of components used in process industries (like pumps, tanks, heat exchangers) the modeling of their capabilities must be carried out. A specific consideration of process variants is not necessary in the modeling phase. Such variants are created automatically in the process generation phase once the capability matching is done. However, this advantage only holds as long as components do not need to be described in too many details. For example, it is easy to describe a pump with the capability "transport water", but it is tedious to describe the pump with all its details concerning the pump left and right limit curve, efficiency diagram, torque-/speed-relation etc. Therefore, the approach is suggested to be used for the creation of major process setups as it is described in a Process Flow Diagram (PFD) but not for the creation of P&IDs.

The inventors further assessed that the approach proposed in the related application uses Large Language Models to solve the task and that therefore, a manual modeling of the engineering domain is not necessary. It was found that this is the major advantage of the suggested approach over a rule-based system and the pre-condition for a wide distribution of such a solution.

However, as already mentioned above, this approach requires a database of annotated P&IDs. And even if P&IDs can be annotated automatically as proposed in the related application, a considerable number of manually annotated P&IDs is required to train the model for the P&ID annotation. In the first place, it is not a big difference, whether a user must annotate, i.e. verbally describe, P&IDs or whether he highlights the optional parts and defines the rules under which these parts exist as it would be required for the implementation of a rule-based solution.

Eventually the inventors solved the part of the underlying objective based on the assessment stated above by identifying the problem that to fully leverage the advantage of the solution proposed in the related application, training data for the annotation LLM as well as the P&ID creation LLM must be created automatically.

This problem is solved by the computer-implemented method according to the preamble of claim 1, based on the features of the preamble by its characteristic features, by the arrangement according to the preamble of claim 12, by the computer program product according to the preamble of claim 13 and by the provisioning device according to the preamble of claim 14.

The computer-implemented method for generating a Piping and Instrumentation Diagram-, "P&ID"-, library, in particular for building a P&ID representing a process, in particular industrial process, to be established, is characterized in that said P&ID-library is generated in such a manner that at least part of its data is applicable to train at least one LLM.

With the invention, automatic training is possible at least of parts of LLMs used in conjunction with P&ID design processes, so that, especially when such P&ID design processes are performed automatically, in particular according to the method and arrangement taught in the related application, the degree of automation is increased to an optimal level.

Furthermore, the invention relates to an arrangement for performing the computer implemented method. The arrangement has the advantage of having the means to carry out the method and hence helps to implement the advantages of the computer-implemented method according to the invention.

The computer program product comprises instructions which, when the program is executed by a computer, cause the computer to carry out the method.

The provisioning device stores and/or provides the computer program product.

Further advantageous arrangements and embodiments of the invention are set forth in the respective dependent claims.

According to a first embodiment of the method and arrangement according to the invention a first P&ID library is built utilizing at least a first Large Language Model, "LLM", whereby prompting of said first LLM is based on at least a multitude of complete, in particular including all subsystems P&IDs required for a process, sets of P&IDs that are uniquely related to a process, e.g. based on a history of former complete sets of P&IDs for processes to be established.

The method of the invention makes it possible to reduce the time required because it automatically generates the P&ID based on P&ID knowledge and processes relationships, e.g. based on previous projects. Therefore, process-to-P&ID correlating information is automatically created and is part of this library. Hence, using the library in a method for the automatic generation of P&ID flowsheets for a process to be set up is possible, for example, according to the procedure and arrangement according to the related application, such a process is used to automate and further reduce the time required. In addition, by using an LLM, it can be optimized in certain effective ways, such as known fine-tuning methods, so that the results are accurate and reliable.

According to another embodiment of the method and arrangement according to the invention said first library is built in such a manner that it includes first data representing a multitude of pairs, said pairs consisting of a first textual annotation and said complete sets of P&IDs, whereby said first textual annotations are built in such a manner that for each subsystem of said complete sets of P&IDs a unique second annotation, for example the subsystem's purpose, the solution approach, the description of the equipment within the subsystem, and/or the functionalities that the subsystem offers, is assigned.

With this embodiment a preferable method to describe said P&IDs-to-process relationship is given. Due to the LLM used it is furthermore possible to structure and formulate the textual annotation in such a manner that it is optimal for processes generation P&IDs of processes to be established and because of the pairs built, an effective P&ID retrieving process is possible further contributing to the objective of reducing the time consumed for generation P&IDs.

According to another embodiment of the method and arrangement according to the invention building said first library comprises the steps of
a) retrieving one complete set of P&IDs of said multitude of complete sets of P&IDs
b) generating said first textual annotations for each complete P&IDs by prompting said first LLM with at least said one complete set of P&IDs
c) assigning said first textual annotations to said one complete set of P&IDs in such a manner that a pair of first textual annotations and a complete set of P&IDs is built,
d) storing said pair in said first library,
e) repeating the steps for all complete sets of P&IDs available.

With this embodiment concise and effective steps are defined. In detail the steps, and hence the embodiment, ensure in particular that a complete set of P&IDs is retrieved and stored in the first library. By generating first textual annotations for each complete set of P&IDs, the approach allows for structured and organized information. This makes it easier to search, retrieve, and understand specific details within the P&IDs. The pair of first textual annotations and a complete set of P&IDs are stored in the first library. This ensures that the information is stored in a structured manner, making it easier to access and manage the data. The method can be repeated for all complete sets of P&IDs available, allowing for scalability. This means that as more sets of P&IDs become available, they can be easily incorporated into the first library, ensuring that the documentation remains up-to-date and comprehensive. This suggests a collaborative approach where experts or stakeholders can contribute their knowledge and insights to create the annotations, ensuring a more accurate and insightful documentation process. By prompting the LLM with the set of complete P&IDs knowledge, e.g. based on former projects and/or experts, that has already been collected, can be utilized to automatically generate said annotations.

According to yet another embodiment of the method and arrangement according to the invention said first LLM is preferably trained in such a manner that an annotation model is built, whereby said training is based at least utilizing data generated by a so-called capability matching process. With such an approach the LLM, e.g. an off-the-shelf model like the ChatGPT models, can be optimized for the embodiments according to the invention, in particular it is possible to generate standardized annotations allowing for adaption to processes for P&ID generation, e.g. the method according to the related application, in particular the retrieval sub-process of it.

According to yet another embodiment of the method and arrangement according to the invention the multitude of complete sets of P&IDs are stored in a second library. This allows to provide an accessible and well-structured source.

According to a further embodiment of the method and arrangement according to the invention the capability matching process comprises the following steps:
a) providing at least one production requirements text, in particular natural language input, of a, particularly former, process,
b) generating a textual process description by prompting a second LLM, in particular an off-the-shelf LLM like e.g. GPT-4, with said requirements,
c) matching at least parts of said textual process representing capabilities of said input process to a, in particular P&ID, component library, in such a manner that for each part of said parts of the textual description representing a capability a component and/or connections of the component, e.g. the P&ID, is determined,
d) assigning for each component the respective part of said textual description in such a manner that a pair of said part of said textual description and said component is built,
e) storing said pairs in a third library.

This embodiment allows a further automatization and optimization of the embodiments according to the invention as it allows for generating training data for LLMs, e.g. allowing at least partly automatic training of for example the first LLM. This is possible at least because of the utilization of LLMs and their optimization capabilities, as this embodiment generates rough annotation, i.e. pairs of said rough annotations and components are built, and though these pairs represent a rough approach it is enough to generate data with which the first LLM can be trained, as it utilizes concise steps representing a capability matching.

In connection with yet another embodiment of the method and arrangement according to the invention said pairs are utilized as the data for the annotation model training, said advantage can be fully realized.

According to a further embodiment of the method and arrangement according to the invention for building said P&ID representing a process, in particular industrial process, to be established, a third LLM is utilized, said third LLM being trained as a P&ID creation model utilizing said third library in such a manner that solely the components of said pairs of said part of said textual description and said components are used as prompts for said training.

With this embodiment the third library allows for an automatic training of a LLM that is utilized to generate P&IDs for a process to be established, so that this also can at least partially automatically be optimized and performed. With applying said third library also for this purpose also time consumption and effort is further as the same source is used for two sub-processes of said P&IDs generation. This due to the fact that the third library data also includes the data that is needed for said purpose, which could be easily retrieved by just extracting the relevant parts of the pairs.

These two applications are just examples of the application of the third library, so that the application of the third library is not limited to these two applications but rather can be ground for training of any LLM that could be trained with at least part of the data that is stored in said library.

According to yet another embodiment the method and arrangement according to the invention is characterized in that said library, in particular the first, second and/or third library, is run as at least one database. This is one of the most appropriate realizations of a library.

According to a further embodiment of the method and arrangement according to the invention said library, in particular the first, second and/or third library, utilizes a cloud and/or local storage. This embodiment also defines appropriate implementations of said libraries, whereby utilizing said storage in a cloud in particular allows for a centrally provided data maintenance, where all stakeholders can contribute their updates, e.g. newly found P&IDs, whereas local storage allows for proprietary provided maintenance, e.g. to keep internal data secret. A combination of both is also possible, for example to do both an update of the libraries with non-confidential data and locally with confidential data, whereby this might imply that the library is built of more storages/databases for this heterogeneous purpose.

The following embodiments of the invention are explained in more detail based on Figures 1 to 4. In Figures 1 to 4, the same or functionally identical elements are provided with the same reference numerals, unless otherwise specified. The figures show:
- Figure 1: shows a schematic representation of a first embodiment of the computer implemented method according to the invention in its most general form applied to a process for automatic P&ID generation,
- Figure 2: shows as a further exemplary embodiment of the computer implemented method according to the invention a schematic representation of an automatic P&ID annotation based on capability matching,
- Figure 3: shows another exemplary embodiment of the capability matching according to the invention,
- Figure 4: finally shows a schematic representation of yet another exemplary embodiment of the method according to the invention training into a complete P&ID according to the invention.

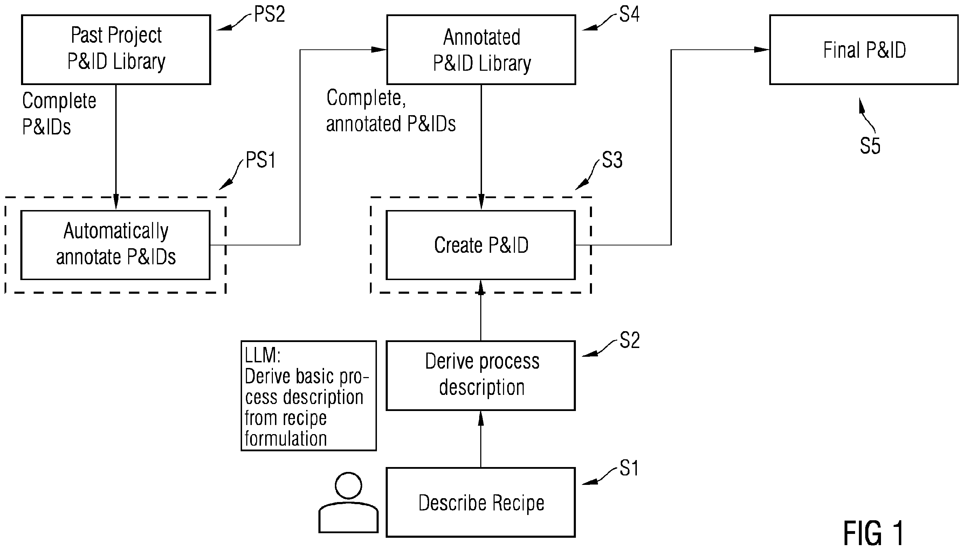

The embodiments described below in Figures 1 to 4 are preferred embodiments and developments of the invention.

In particular, the following embodiments merely show exemplary possible realizations, such as possible realizations of the inventive concept, as it is impossible and also not necessary or expedient for understanding the invention to mention all these possible realizations.

Furthermore, all the usual possibilities for realizing the invention in the prior art are known to a person skilled in the art, particularly in light of the independent claims, so that an independent disclosure in the description is not necessary.

In the embodiments the described components of the embodiments each represent individual features of the invention, which further develop the invention independently of one another and are therefore also to be regarded as components of the invention individually or in a combination other than the one shown.

Furthermore, the described embodiments can be supplemented by further features of the invention already described.

The same reference numerals have the same meaning in the different Figures.

In Figure 1 a schematic representation of a first embodiment of the computer implemented method according to the invention in its most general form is depicted, particularly applied in a system to generate P&IDs according to any of the embodiments disclosed in the related application.

As can be seen according to the embodiment of the method and the system according to the invention a module carries out a first step S1 where a natural language input, i.e. the so-called recipe of a user is received that describes a new process to be established.

In a second step S2, which is then at least partly carried out by the same and/or another module, a process description is derived. This is based on a large language model that is carried out by the module and capable, i.e. trained, to derive basic process description from recipe formulation.

Subsequently in a third step S3 that is at least partly carried out by the same and/or another module, the P&ID for the new process is, based on the same and/or another large language model, created based on one hand on the description that has been derived and on the other hand on a library, e.g. provided by a database, having various, ideally for said purpose complete, number of pairs of P&IDs and a related annotation, whereby for the purpose of creating a P&ID for the process to be established, the derived description is matched with the annotations of said library in a forth step S4 that is at least partly carried out by the same and/or another module so that P&IDs of sub-systems given by the description/annotation matches can be used to create a final P&ID of the process to be established in a fifth step S5 at least partly carried out by the same and/or a further module.

As can be seen as a prerequisite for the fourth step S4 according to the embodiment of the invention annotated P&ID pairs of said library are created automatically in a first preprocessing step PS1 that is at least partly carried out by the same and/or another module, whereby said automatic creation is based on historic data that was collected and is as a second preprocessing step PS2 provided as a further library, e.g. provided as a further database, containing P&IDs for known processes, i.e. from past projects.

In a nutshell the Figure 1 shows that first a solution for the automatic annotation of P&IDs is used to create the library of annotated P&IDs, whereby based on a process description, which is derived from a requirement definition (recipe) via an LLM, the final P&ID is created by automatically combining building blocks (sub-systems) from the library.

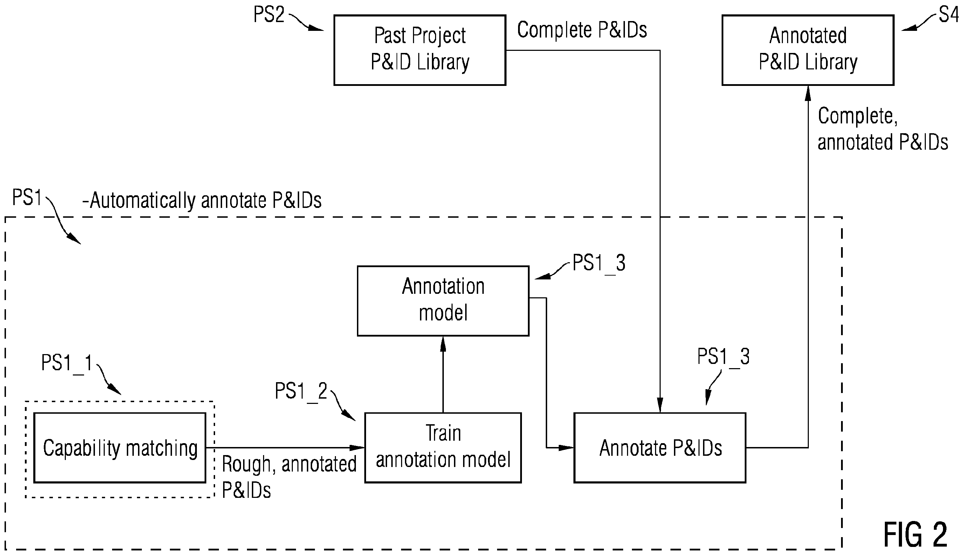

Figure 2 depicts as a further embodiment of the invention a more detailed view on the application of said preprocessing step PS1 in connection with said second preprocessing step PS2 and in connection with said fourth step S4.

What can be seen is that for automatic annotation of P&IDs according to the embodiment as a first automatic annotation step PS1_1 compatibility matching is applied carried out by a module, which provides a second automatic annotation step PS1_2 with annotated rough P&IDs, e.g. pairs of annotations and rough P&IDs, so that in said second automatic annotation step PS1_2 a large language model is trained that is run in a third automatic annotation step PS1_3 in order to find annotations for P&IDs that are provided in said second preprocessing step PS2 so that in a fourth automatic annotation step PS1_4 P&IDs can be annotated with which the library provided and applied in said fourth step S4 is built.

In a nutshell, figure 2 shows the detail of automatic P&ID annotation. A capability matching approach is used to create rough, annotated P&IDs. Such P&IDs include major process setups but not more details respectively minor components (like measurements, control lines, ...). The rough, annotated P&IDs can be used to train the annotation model. After the training, the model can automatically annotate the P&IDs which are provided, e.g. from a past project P&ID library. Via these means a library of complete, annotated P&IDs is derived.

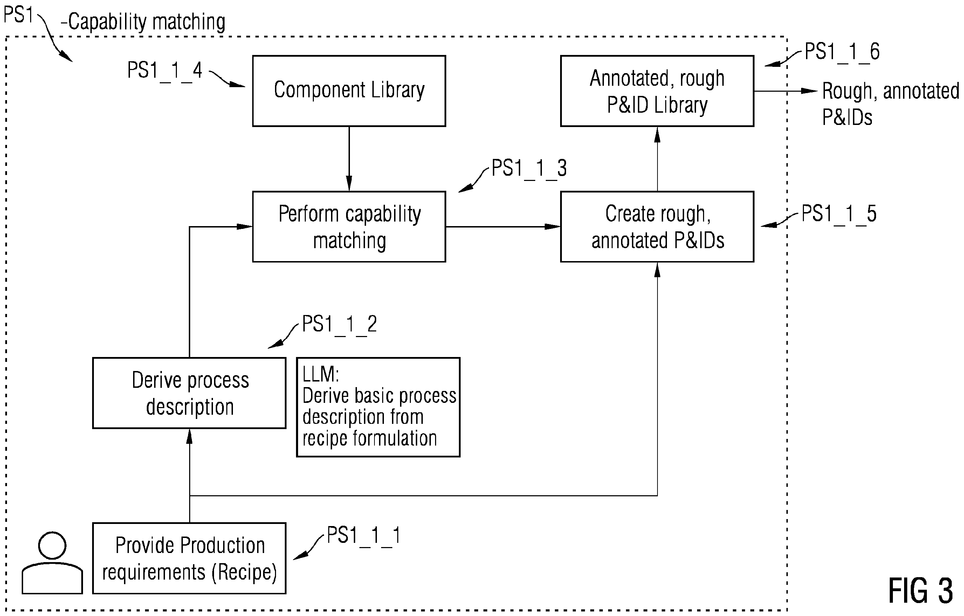

Figure 3 depicts as a further embodiment of the invention a more detailed view on the application of said capability matching according to said first automatic annotation step PS1_1 generating said roughly annotated P&IDs, e.g. as pairs of annotations and respective rough P&IDs.

As can be seen, as a first capability matching step PS1_1_1 a user input is required and received that provides some recipes.

From this input a process description is derived in a second capability matching step PS1_1_2, whereby a large language model (LLM) is applied for this purpose and whereby according to further embodiments of the invention the large language model might be one of the previously mentioned large language models and/or a separate one.

After that in a third capability matching step PS1_1_3 one and/or more capability matching algorithms are applied, e.g. the ones mentioned above in the assessment of the inventors, utilizing the description of said second capability matching step PS1_1_2 and P&ID components that are provided in a fourth capability matching step PS1_1_4 from a component library, e.g. provided by a database, in particular one of the previously mentioned databases, so that in a fifth capability matching step PS1_1_5 said rough, annotated P&IDs are successively created with which in a sixth capability matching step PS1_1_6 a library, e.g. provided as a database, containing pair of annotations and respective rough P&IDs is built.

In a nutshell, figure 3 depicts the approach for capability matching, where as an input for the capability matching serves a process description, which is derived via a LLM from a production requirement definition (recipe). The required capabilities specified by this requirement definition are matched to the provided capabilities as modeled in a component library for the available process components.

A component library is well known in the context of capability matching and P&ID design and refers to a collection of predefined components or building blocks that are used to create process flow diagrams (P&ID - Piping and Instrumentation Diagram). These building blocks represent various devices, instruments, piping, or other elements used in an industrial process. Via these means the components required to fulfill the production requirements and their respective connections can be derived. This already defines a basic process setup namely a rough P&ID. As mentioned above, modeling efforts are not high to achieve this goal, because as yet another embodiment only major components must be described with their basic capabilities. The created rough P&ID can then be automatically annotated using the available requirements specification.

To create a reasonable number of such rough, annotated P&IDs, different production requirements must be specified as input data. This can be done by automatically selecting step by step the different options of a recipe. Since a LLM is used to translate the recipe to a process description, it is not necessary to provide full-blown recipes to perform this task. It is sufficient to use basic requirement definitions, which would trigger the different possible variants of P&IDs. Such recipe options are well known and can be provided seamlessly.

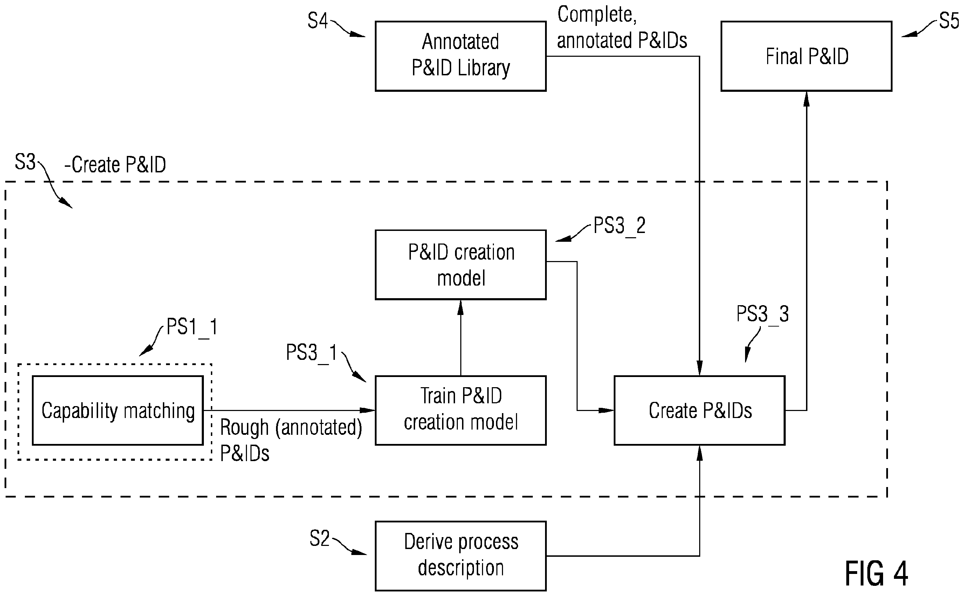

The training of the model, with which the creation of a final P&ID (combination of building blocks, i.e. P&IDs of sub-systems, from full-blown P&IDs) is to be performed, requires training data as well. This training data can according to another embodiment of the invention be created automatically in a corresponding way as will be shown in figure 4. The only difference is that for the training according to the embodiment shown in figure 4 the annotation is of no relevance. However, the same data can be used for the training as will be shown in more detail in the following.

Figure 4 depicts as a further embodiment of the invention a more detailed view on the application of said third step S3 that creates P&IDs, i.e. the preprocessing for said third step S3.

As can be seen, the preprocessing starts with a capability matching that according to the embodiment is equal to the first capability matching step PS1_1, i.e. preferably carried out in the same way. Following this capability matching step PS1_1 a first create P&ID preprocessing step PS3_1 is provided with rough (annotated) P&IDs so that in said first create P&ID preprocessing step PS3_1 the P&ID creation model is successively trained, so that as a second create P&ID preprocessing step PS3_2 a pre trained P&ID creation model is built and can subsequently be applied to create P&IDs in a third create P&ID preprocessing step PS3_3, whereby the latter based on said second step S2 and based on said fourth step S4 finally provides the P&ID for the process to be established in said fifth step S5.

The invention is not limited to said embodiments. For example, as already mentioned above, many variants might exist for a certain sub-system included in a corresponding P&ID. Based on the P&ID generation system described in the related application, a newly created P&ID can be composed only from sub-systems (building blocks) which are available in the corresponding library. If a certain variant of a sub-system is needed in a specific project but not available in the library, the finally generated P&ID would not fully fulfill the needs of the project.

However, not every theoretically possible variant of a sub-system will be used in real projects. This is especially true, if the limited scope of a certain domain or, for example, just one company and the specific designs they use in their projects, is considered. It also should be mentioned that the benefit of automatic P&ID creation does not depend on always 100% correct P&IDs. Users have a considerable benefit already, if they get a P&ID created which fits to their needs by, for example 80% and which can be adapted accordingly.

However, using the solution as proposed in the embodiments of the invention improves the situation considerably. The library of annotated, rough P&IDs generated according to the embodiments of the invention covers - approximately - all possible variants of sub-systems which can occur. Therefore, the models for automatic annotation and automatic P&ID generation are trained accordingly. Furthermore, according to a further embodiment of the invention, if a new, real P&ID is provided which includes variants of sub-systems which have not been seen before in the library of real P&IDs they can be easily annotated automatically and be used for P&ID creation. This means, that according to said further embodiment the library of complete, annotated P&IDs can be continuously extended over time thus improving the performance of the P&ID generation solution step-by-step.

*Independent of the grammatical term usage, individuals with male, female or other gender identities are included within the term.*

## Claims

1. Computer-implemented method for generating a Piping and Instrumentation Diagram-, "P&ID"-, library, in particular for building a P&ID representing a process, in particular industrial process, to be established, whereby said "P&ID"-, library is generated in such a manner that at least part of its data is applicable to train at least one LLM.

2. The method according to claim 1, whereby a first P&ID library is built utilizing at least a first Large Language Model, "LLM", whereby prompting of said first LLM is based on at least a multitude of complete, in particular including all subsystems P&IDs required for a process, sets of P&IDs that are uniquely related to a process, e.g. based on a history of former complete sets of P&IDs for processes to be established.

3. The method according to claim 2, whereby said first library is built in such a manner that it includes first data representing a multitude of pairs, said pairs consisting of a first textual annotation and said complete sets of P&IDs, whereby said first textual annotations are built in such a manner that for each subsystem of said complete sets of P&IDs a unique second annotation, for example the subsystem's purpose, the solution approach, the description of the equipment within the subsystem, and/or the functionalities that the subsystem offers, is assigned.

4. The method according to one of the preceding claims, whereby building said first library comprises the steps of
a) retrieving one complete set of P&IDs of said multitude of complete sets of P&IDs,
b) generating said first textual annotations for each complete P&IDs by prompting said first LLM with at least said one complete set of P&IDs,
c) assigning said first textual annotations to said one complete set of P&IDs in such a manner that a pair of first textual annotations and a complete set of P&IDs is built,
d) storing said pair in said first library,
e) repeating the steps for all complete sets of P&IDs available.

5. The method according to one of the preceding claims, whereby said first LLM is trained in such a manner that an annotation model is built, whereby said training is based on at least utilizing data generated by a so-called capability matching process.

6. The method according to one of the two preceding claims, whereby the multitude of complete sets of P&IDs are stored in a second library.

7. The method according to one of the preceding claims, whereby the capability matching process comprises the following steps:
a) providing at least one production requirements text, in particular natural language input, of a, particularly former, process,
b) generating a textual process description by prompting a second LLM, in particular an off-the-shelf LLM like e.g. GPT-4, with said requirements,
c) matching at least parts of said textual process representing capabilities of said input process to a, in particular P&ID, component library in such a manner that for each part of said parts of the textual description representing a capability a component and/or connections of the component, e.g. the P&ID, is determined,
d) assigning for each component the respective part of said textual description in such a manner that a pair of said part of said textual description and said component is built,
e) storing said pairs in a third library.

8. The Method according to the preceding claim, whereby said pairs are utilized as the data for the annotation model training.

9. The Method according to one of the two preceding claims, whereby for building said P&ID representing a process, in particular industrial process, to be established, a third LLM is utilized, said third LLM being trained as a P&ID creation model utilizing said third library in such a manner that solely the components of said pairs of said part of said textual description and said components are used as prompts for said training.

10. Method according to one of the preceding claims, whereby said library, in particular the first, second and/or third library, is run as at least one database.

11. Method according to one of the preceding claims, whereby said library, in particular the first, second and/or third library, utilizes a cloud and/or local storage.

12. Arrangement for carrying out the computer implemented method according to one of the previous claims.

13. A computer program product comprising instructions which, when the program is executed by a computer, cause the computer to carry out a method according to one of the method claims.

14. A provisioning device for the computer program product according to the preceding claim, wherein the provisioning device stores and/or provides the computer program product.
